# EUROPÄISCHE PATENTSCHRIFT

(11) **EP 1 747 990 B1**
(45) Veröffentlichungstag und Bekanntmachung des Hinweises auf die Patenterteilung: **11.02.2009**
(21) Anmeldenummer: 06013983.9
(22) Anmeldetag: 06.07.2006
(51) Int. Cl.: B64D 17/80, B64D 25/12

(54) **Fluggerät mit einem Rettungslandesystem**
Aircraft with a rescue landing system
Aéronef avec un système d'atterrissage de secours

(30) Priorität: 29.07.2005 DE 102005035437
(43) Veröffentlichungstag der Anmeldung: 31.01.2007
(73) Patentinhaber: EADS Deutschland GmbH, 85521 Ottobrunn (DE)
(72) Erfinder: Christof, Horst, 85653 Aying (DE)

(56) Entgegenhaltungen:
- WO-A-01/74659
- DE-A1- 4 208 839
- FR-A- 603 599
- GB-A- 663 075
- SE-C- 206 957
- US-A- 2 631 797

## Beschreibung

Die Erfindung bezieht sich auf ein Fluggerät mit durch den Schwerpunkt verlaufender Längsachse und im wesentlichen dazu senkrecht stehender Hochachse mit einem Rettungslandesystem, welches über ein von Betriebsparametern des Fluggeräts auslösbares Startsignal von einer Auslöseinheit aktivierbar ist, wobei das Rettungslandesystem einen Gleitschirm für die Rettungslandephase des Fluggeräts umfasst und die Auslöseinheit so angepasst ist, dass bei Auftreten des Startsignals ein mittels Fangleinen am Fluggerät angelenkter Verzögerungsschirm ausgestoßen wird.

Bei dem Fluggerät mit der vorbezeichneten Merkmalskombination handelt es sich um innerbetrieblichen Stand der Technik der Anmelderin. Eine Veröffentlichung ist nicht bekannt. Notorisch bekannt im Stand der Technik ist es jedoch, einen Rettungsfallschirm mittels eines kleinern Verzögerungsschirmes aus seiner Verstauposition in die Betriebsposition herauszuziehen.

Aus der DE 42 39 638 A1 ist ein Fluggerät mit einem Rettungslandesystem bekannt, welches über ein von Betriebsparametern des Fluggeräts auslösbares Startsignal aktivierbar ist. Das Rettungslandesystem umfasst einen mittels Zugleinen am Fluggerät angelenkten Verzögerungsschirm, der zur Reduzierung der Geschwindigkeit dient. Durch den Verzögerungsschirm wird gleichzeitig eine Schräglage des Flugzeugs in der Art hervorgerufen, dass sich das Heck des Flugzeugs in Richtung Boden neigt. In dieser Flugphase wird automatisch das Ausbringen eines zweiten Fallschirms für die Rettungslandung bewirkt. Bei der sich anschließenden harten Landung wird das Heck des Fluggeräts deformiert, während die formsteife Kabine im wesentlichen unverändert bleibt.

Die DE 199 34 210 A1 und die DE 25 03 322 A1 beschreiben jeweils Rettungslandesysteme für Flugzeuge, bei dem für die Rettungslandephase ein Gleitschirm oder ein Gleitsegel vorgesehen ist, wobei die Fluglage des Flugzeugs in der Rettungslandephase sich gegenüber der normalen Flugphase nicht oder nur unwesentlich ändern soll.

Ein weiterer wesentlicher Stand der Technik ist durch US 2 631 797 gegeben.

Aufgabe der vorliegenden Erfindung ist es, ein Fluggerät, welches bei Fluggeschwindigkeiten im Bereich von 200 m/sec und mehr operiert, mit Hilfe eines Gleitschirms sicher, d.h. ohne Beschädigung, zum Boden zurückbringen zu können und zwar auch im Falle einer Notsituation, wie z. B. dem Ausfall des Triebwerks. Dabei ist der bauliche Aufwand für ein solches Rettungslandesystem gering zu halten und es ist ein solches System zu schaffen, welches hohe Zuverlässigkeit garantiert. Darüber hinaus soll gewährleistet sein, dass der benötigte Bauraum für das Rettungslandesystem, der ohnehin aufgrund des benötigten Gleitschirmes für die Rettungslandephase nicht unerheblich ist, so gering wie möglich gehalten wird, da der Bauraum von Fluggeräten für die ein solches Rettungslandesystem in Betracht kommt, nämlich vor allem unbemannte militärische Fluggeräte, sehr begrenzt ist. Schließlich ist zu berücksichtigen, dass das zu landende Fluggerät üblicherweise beim Auftreten eines Notfalls, wie z. B. dem Ausfall des Antriebsorgans, eine hohe Geschwindigkeit in der Größenordnung von über 200 m/sec aufweist und das Fluggerät deshalb zunächst aus einer Marschflugbewegung in eine Sinkflugbewegung abgebremst werden muss, bevor der Gleitschirm für die Rettungslandephase aufgefaltet werden kann, da Gleitschirme erst unterhalb von Geschwindigkeiten im Bereich von 50 m/sec aufgefaltet werden dürfen.

Die vorgenannten Anforderungen werden erfindungsgemäß von einem Fluggerät erfüllt, welches die Merkmale nach dem Patentansprüchen 1 und 5 aufweist.

Ein entscheidender Vorteil eines Fluggerätes mit dem Rettungssystem nach der Merkmalskombination des Patentanspruchs 1 besteht darin, dass zum Abbremsen des Fluggerätes aus seiner hohen Ausgangsfluggeschwindigkeit auf eine Flug- und Sinkgeschwindigkeit, die für einen Gleitschirm geeignet ist, außer dem üblicherweise angewendeten, hier als Verzögerungsschirm bezeichneten Hilfsfallschirm nur ein Bremsschirm benötigt wird, der sowohl das Abbremsen des Fluggeräts als auch das Verschwenken des Fluggeräts bezüglich der Zugrichtung dieses Schirmes durch geschickte Anlenkung der Fangleinen bewirkt und deshalb als Fluglagepositionierungsschirm bezeichnet ist. Das Fluggerät wird also, nachdem ein Hilfsschirm die Ausgangsgeschwindigkeit reduziert und den Fluglagepositionierungsschirm aus seiner Stauposition herausgezogen hat, vom Fluglagepositionierungsschirm in einer ersten Phase in seiner normalen Fluglage, bei der die Bewegungsrichtung mit der Längsachse des Fluggeräts übereinstimmt, bis auf eine Geschwindigkeit abgebremst, die ein Schwenken des Fluggeräts zulässt. In der zweiten Phase wird durch geschickte Steuerung der Krafteinleitung des Fluglagepositionierungsschirmes in das Fluggerät dieses so geschwenkt, dass die Hochachse im wesentlichen der Zugrichtung des Fluglagepositionierungsschirms entspricht und das Fluggerät so in den Sinkflug übergeht. Erst in einer dritten Phase wird dann der Gleitschirm nach oben aus dem Fluggerät herausgezogen und dient einem langsamen Sinkflug und einer Gleitlandung. Dabei kann ein allfällig vorhandenes Fahrwerk ausgefahren sein und auf diese Weise eine Fahrwerklandung stattfinden.

Bei dem Gegenstand des unabhängigen Patentanspruchs 5 wird auf einen separaten Verzögerungsschirm verzichtet. Der Fluglagepositionierungsschirm dient sowohl zum Abbremsen wie auch zur Fluglagepositionierung, weshalb dieser Schirm im folgenden als Brems- und Fluglagepositionierungsschirm bezeichnet wird. In einer vorteilhaften Ausführung wird der Brems- und Fluglagepositionierungsschirm in einer ersten Phase nach dem Ausstoßen nur teilweise entfaltet, d.h. er weist gegenüber dem voll entfalteten Zustand einen geringeren Durchmesser auf. Erst bei Erreichen einer vorgegebenen Grenzgeschwindigkeit wird der Brems- und Fluglagepositionierungsschirm mittels einer Freigabeeinrichtung, z.B. einem pyrotechnischen Cutter, vollständig entfaltet. Nach weiterer Abbremsung erfolgt schließlich die Verschwenkung des Fluggeräts.

Bei einer bevorzugten Ausführungsform der Erfindung, die insbesondere die Forderung nach baulicher Einfachheit erfüllt, ist die Positionierungseinrichtung für den Fluglagepositionierungsschirm oder für den Brems- und Fluglagepositionierungsschirm nach den Merkmalen des Patentanspruchs 2 gestaltet. Diese Ausführung vereinigt in sich nicht nur bauliche Einfachheit, äußerst geringen Platzbedarf und niedrige Kosten sondern lässt auch höchste Betriebssicherheit erwarten.

Darüber hinaus ist es möglich, die Übertragung der Bremskraft des Fluglagepositionierungsschirms oder des Brems- und Fluglagepositionierungsschirms von dem ersten Paar Fangleinen auf das zweite Paar Fangleinen zur Verschwenkung des Fluggeräts schrittweise erfolgen zu lassen, um möglichst stabile Strömungsverhältnisse am Fluggerät aufrecht zu erhalten. Ausgehend von noch relativ hoher Geschwindigkeit beim Beginn des Verschwenkens des Fluggeräts wird also nur eine geringe Verschwenkung veranlasst, die üblichen Anstellwinkeln von Fluggeräten entspricht und erst nach weiterem Abbremsen wird die Verschwenkung dann schrittweise soweit erhöht, bis die Hochachse des Fluggeräts im wesentlichen der Zugrichtung des Fluglagepositionierungsschirms entspricht.

Schließlich ist es in weiterer Ausbildung der Erfindung vorteilhaft, auch die Freigabeeinrichtung für das Herausziehen des Fluglagepositionierungsschirmes aus seiner Stauposition in eine Bremsposition mit Hilfe einer Klemmeinrichtung zu gestalten, wie es die Merkmale nach Patentanspruch 4 angeben.

Die Erfindung wird anhand eines Ausführungsbeispiels mit Bezug auf die beigefügten Zeichnungen beschrieben. In den Zeichnungen zeigt
- Fig. 1: das schematisierte Bild eines Fluggeräts im Längsschritt und in Draufsicht mit Rettungslandesystem nach der Erfindung, wobei alle wesentlichen Elemente unabhängig von der Sequenz ihrer Betätigung dargestellt sind,

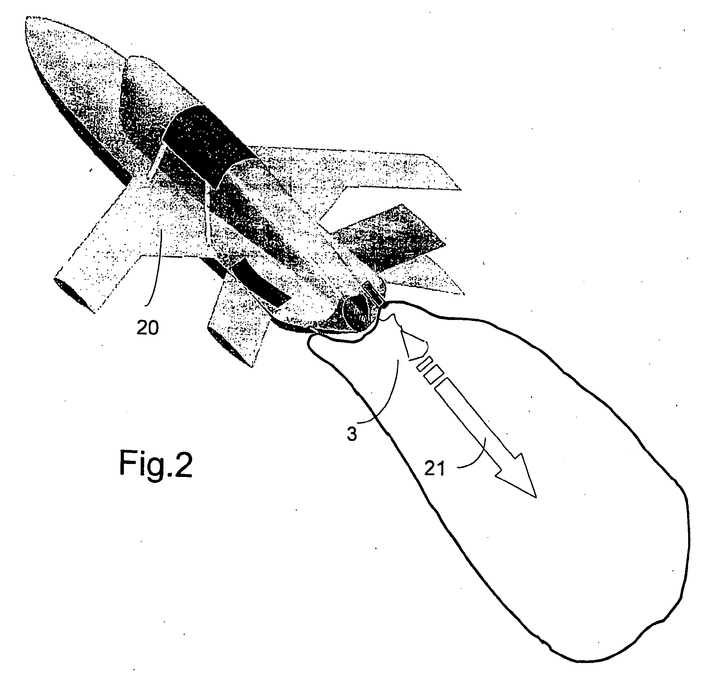

- Fig. 2: das Fluggerät gemäß Fig. 1 im Schrägbild nach Auslösung des Startsignals für das Rettungslandesystem,
- Fig. 3: das Fluggerät nach Fig. 1 und 2 in einer der Startphase nach Fig. 2 folgenden Rettungslandephase, bei der der Verzögerungsschirm 3 den Fluglagepositionierungsschirm 6 aufgefaltet hat und dieser in der Längsachse des Fluggeräts Bremszug ausübt,
- Fig. 4: die der Phase nach Fig. 3 folgende Rettungslandephase, in der durch Überleitung der Bremskraft des Fluglagepositionierungsschirmes von einem ersten Paar Fangleinen auf ein zweites Paar Fangleinen eine Verschwenkung des Fluggeräts bezüglich der Zugrichtung des Fluglagepositionierungsschirmes stattfindet,
- Fig. 5: die Rettungslandephase, die der in Fig. 4 gezeigten Phase folgt, bei der das Fluggerät im Sinkflug am Fluglagepositionierungsschirm hängt
- Fig. 6: die letzte Rettungslandephase, bei der ein das Fluggerät tragender Gleitschirm voll ausgefaltet ist, um das Fluggerät am Boden sanft zu landen,
- Fig. 7: die Sequenz der Rettungslandung schematisch,
- Fig. 8: ein Fluggerät ohne separaten Bremsfallschirm, in einer Phase, bei der der Brems- und Fluglagepositionierungsschirms aufgefaltet ist und dieser in der Längsachse des Fluggeräts Bremszug ausübt,

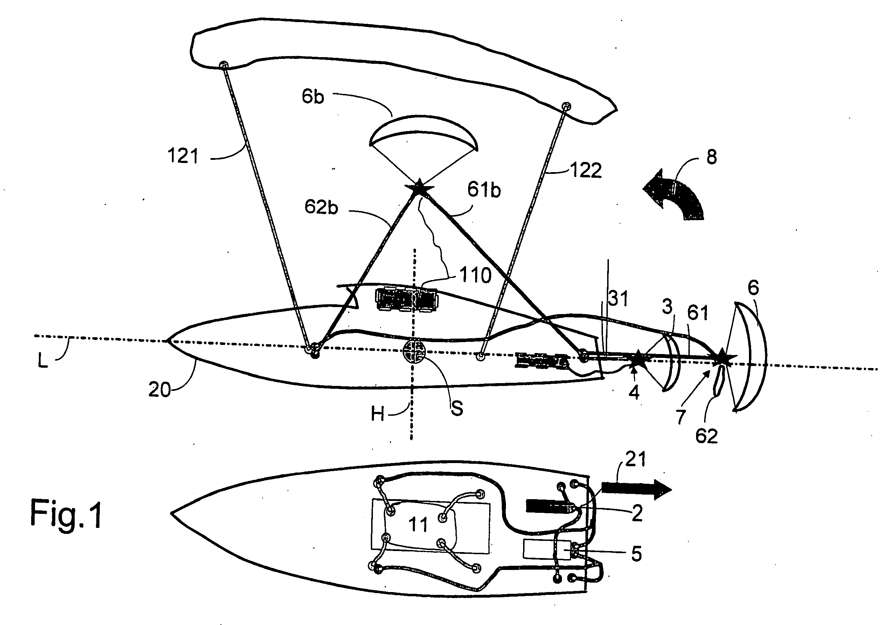

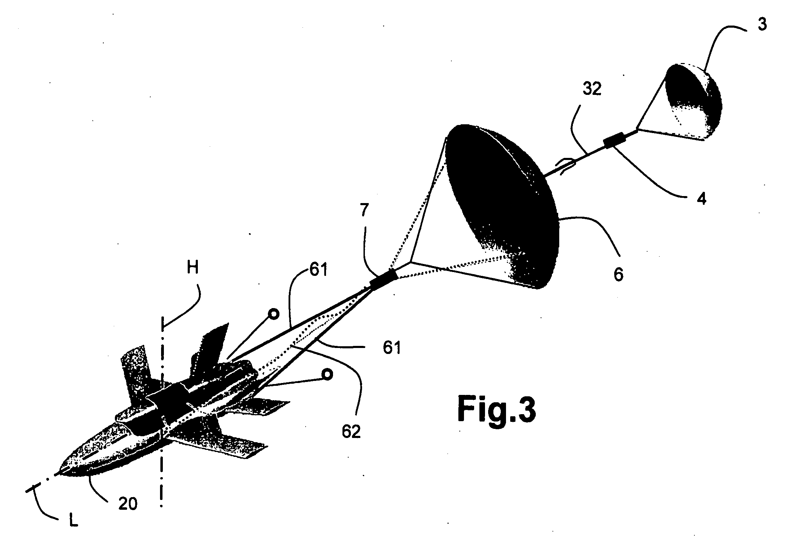

Das in Fig. 1 schematisch im Längsschnitt und in Draufsicht dargestellte Fluggerät 20 mit einem Schwerpunkt S, einer Längsachse L und einer Hochachse H weist in seinem Heckbereich einen Staubehälter 2 für einen Verzögerungsschirm 3 auf, welcher nach Auslösung eines Startsignals mechanisch oder pyrotechnisch in Richtung des Pfeils 21 ausgestoßen wird und danach die im Längsschnitt gezeigte aufgefaltete Position einnimmt, in der er das Fluggerät verzögert. In eine Fangleine 31 des Verzögerungsschirmes 3 ist eine Freigabeeinrichtung 4 gelegt, die bei Abfall der Fluggeschwindigkeit unter eine vorherbestimmte erste Grenzgeschwindigkeit V1 mittels Ausziehleinen einen Fluglagepositionierungsschirm 6 aus seiner Stauposition 5 (vergleiche die Draufsicht in Fig. 1) in eine Bremsposition, wie sie am Längsschnitt der Fig. 1 gezeigt ist, herauszieht. Zunächst wird die Bremskraft das Fluggerät 20 mit Hilfe von einem ersten Paar Fangleinen 61 übertragen, die hinter dem Schwerpunkt S des Fluggeräts 20 an diesem angeschlagen sind. Ein zweites Paar Fangleinen 62, welches vor dem Schwerpunkt S am Fluggerät 20 angelenkt ist, hängt in dieser Phase spannungslos zwischen Fluggerät 20 und Fluglagepositionierungsschirm 6. Dieser Flugzustand ist in Fig. 3 im Schrägbild dargestellt, wobei dort den tatsächlichen Verhältnissen entsprechend der Verzögerungsschirm 3 sich, bezogen auf die Flugrichtung des Fluggeräts 20, hinter dem Fluglagepositionierungsschirm 6 befindet, den er vorher abgefaltet hat.

Mittels eines Rotationspfeiles 8 ist in Fig. 1 die Schwenkbewegung des Fluggeräts 20 bezüglich des Fluglagepositionierungsschirmes 6 in die Fig. 1 eingezeichnet. Nach Abschluss der Schwenkbewegung nimmt der Fluglagepositionierungsschirm 6 die Position 6b oberhalb des Fluggeräts 20 in Fig. 1 ein und es stehen sowohl das erste Paar Fangleinen 61 als auch das zweite Paar Fangleinen 62 unter Spannung, wie es mit den Bezugszeichen 61 b und 62b angedeutet ist. Entsprechend der Verzögerungskraft des Fluglagepositionierungsschirms 6 bewegt sich das Fluggerät 20 dann in Richtung der Hochachse nach unten.

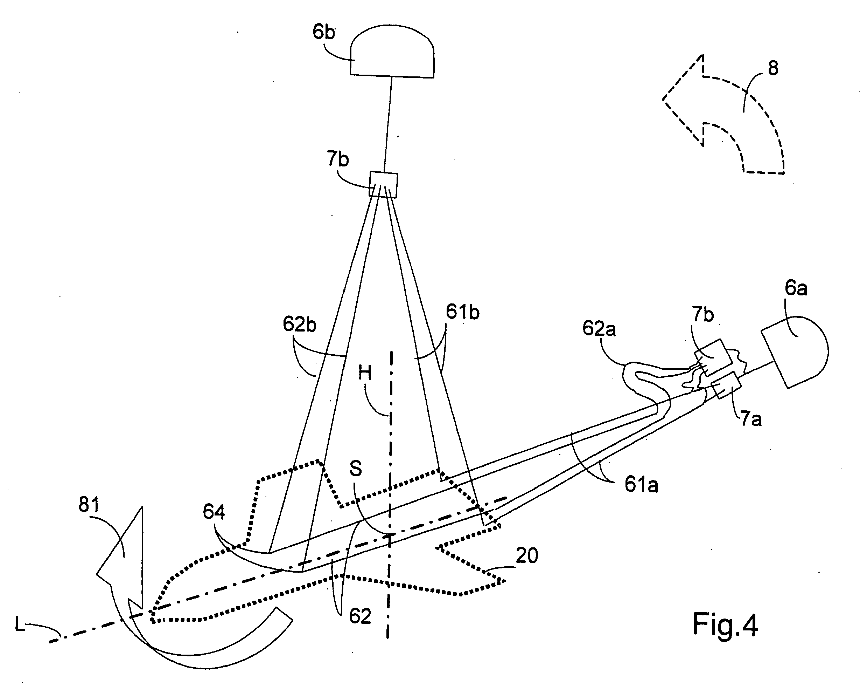

In dem schematisierten Bild gemäß Fig. 4 ist der Verschwenkungsvorgang des Fluggeräts 20 noch einmal dargestellt. Der Ausgangszustand vor der Verschwenkung, d. h. der Zustand, in dem der Fluglagepositionierungsschirm 6 in Längsrichtung L hinter dem Fluggerät 20 hängt, wird jeweils mit dem Index a bezeichnet, der Endzustand, in dem das Fluggerät 20 um etwa 90° verschwenkt ist, wird mit dem Index b an den Bezugszeichen gekennzeichnet. Vor der Verschwenkung steht auf dem ersten Paar Fangleinen 61 der volle Bremszug des Fluglagepositionierungsschirms 6, so dass das erste Paar Fangleinen 61 unter Zugspannung steht, wie es mit 61 a angedeutet ist. Das zweite Paar Fangleinen, welches vor dem Schwerpunkt S am Fluggerät 20 befestigt ist (Befestigungspunkte 64), ist in dieser Phase spannungslos, wie es mit dem Bezugszeichen 62a angedeutet ist. Bei Abfall der Fluggeschwindigkeit unter eine zweite Grenzgeschwindigkeit V2 bewirkt eine Positionierungseinrichtung 7 den Übergang der Bremskraft des Fluglagepositionierungsschirmes 6 auf das zweite Paar Fangleinen 62, wodurch sich die Position des Fluggeräts 20 bezüglich des Fluglagepositionierungsschirmes 6 entsprechend dem Rotationspfeil 81 in Fig. 4 verändert bzw. die Position des Fluglagepositionierungsschirmes sich von der Phase 6a nach 6b verändert. Nach Abschluss der Schwenkbewegung hängt das Fluggerät 20 an beiden Paaren der Fangleinen 61, 62, die dann beide unter Spannung stehen, wie es mit dem Index b in Fig. 4 angedeutet ist. Auch die Positionierungseinrichtung 7 ist in Fig. 4 jeweils in zwei Sequenzen dargestellt, nämlich in der Ausgangsphase 7a und in der nach Auslösung infolge des Unterschreitens der zweiten Grenzgeschwindigkeit V2 eingenommenen Endphase 7b. Die Positionierungseinrichtung 7 besteht im wesentlichen aus einer Klemmeinrichtung, in der das erste Paar Fangleinen 61 zunächst auf einem Teil seiner Gesamtlänge fixiert ist und nach dem Auslösen der Positionierungseinrichtung 7 die ganze Länge des ersten Fangleinenpaares 61 freigegeben wird. Dabei ist die Länge des zweiten Paares Fangleinen 62 so abgestimmt, dass durch die Freigabe der Klemmeinrichtung auf das zweite Paar Fangleinen Zugspannung vom Positionierungsschirm 6 aufgebracht wird und auf diese Weise über die Befestigungspunkte 64 auf das Fluggerät 20 ein Drehmoment entsprechend der Pfeilrichtung 81 in Fig. 4 ausgeübt wird, was die Verschwenkung des Fluggeräts 20 bezüglich des Fluglagepositionierungsschirms 6 bewirkt. Die Freigabe des Fangleinenpaares 61 kann abschnittweise erfolgen, was dann zu einer entsprechend schrittweisen Verschwenkung in Pfeilrichtung 81 führt.

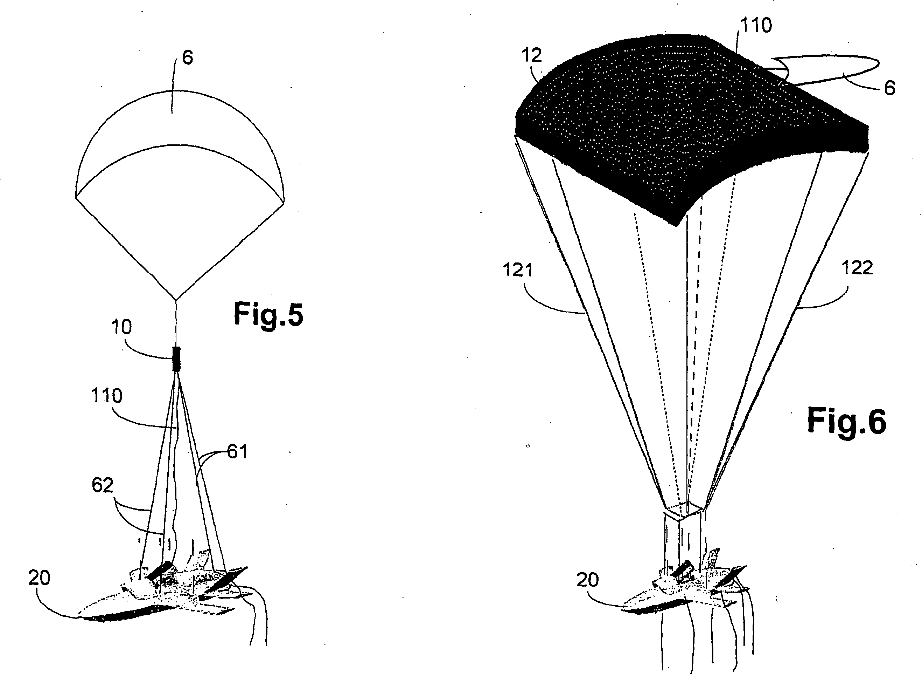

Nach Abschluss der Schwenkungsphase, die gleichzeitig mit einer weiteren Absenkung der Geschwindigkeit des Fluggerätes 20 verbunden ist, nimmt dieses die in Fig. 5 gezeigte Position ein, in der die Hochachse H des Fluggeräts 20 im wesentlichen der Zugrichtung des Fluglagepositionierungsschirmes 6 entspricht.

Mit Hilfe einer Entfaltungseinrichtung 10 wird dann bei Unterschreiten einer vorgegebenen maximal zulässigen Gleitschirmgeschwindigkeit V₃ des Fluggerätes 20 über eine Auszugsleine 110 der Gleitschirm 12 entfaltet. Auch diese letzte Phase des Rettungslandesystems ist in Fig. 1 zusätzlich eingezeichnet. Der Gleitschirm 12 ist mit Leinen 121, 122 am Fluggerät 20 befestigt, die so gestaltet sind, dass damit eine an sich bekannte Steuerung des Gleitschirms 12 ermöglicht wird. Der Gleitschirmflug des Fluggeräts 20 ist in Fig. 6 noch einmal im Schrägbild dargestellt, wo auch angedeutet ist, dass der Fluglagepositionierungsschirm 6 in dieser Flugphase keine Bedeutung mehr hat.

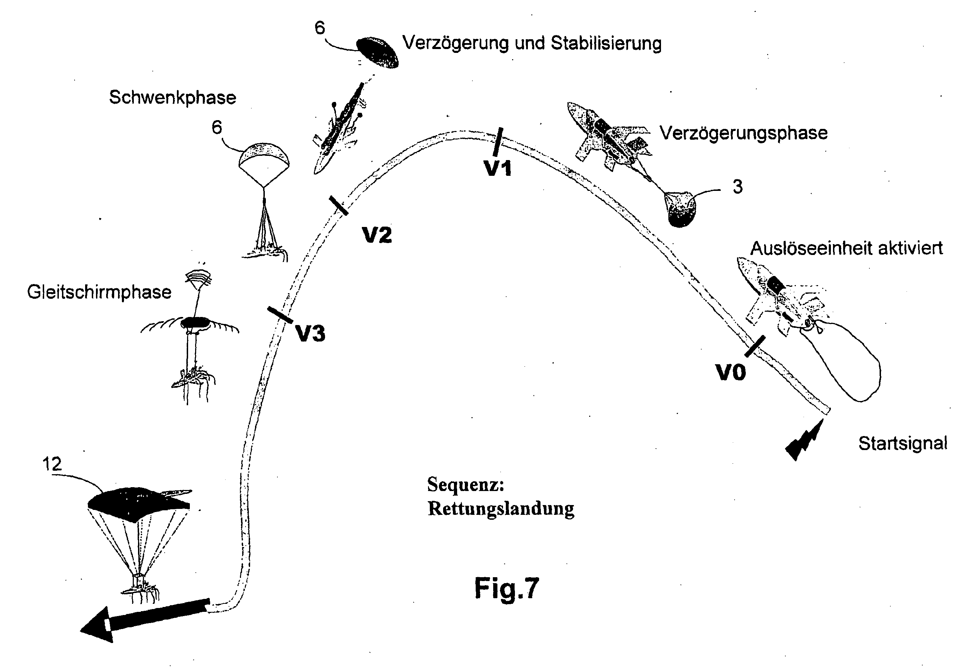

In Fig. 7 ist die Sequenz der Rettungslandung schematisch dargestellt, beginnend mit der Marschgeschwindigkeit des Fluggeräts V₀ und dem Startsignal am linken Rand der Fig., danach erfolgt die Aktivierung der Auslöseeinheit, die Verzögerungsphase mit ausgefaltetem Verzögerungsschirm 3, in der die Geschwindigkeit von der ursprünglichen Marschgeschwindigkeit V₀ auf die Grenzgeschwindigkeit V₁ verringert wird; es folgt das Herausziehen des Fluglagepositionierungsschirmes 6 bei Erreichen der Grenzgeschwindigkeit V₁ mit der sich anschließenden Verzögerungs- und Stabilisierungsphase, die bei Erreichen der Grenzgeschwindigkeit V₂ eingeleitete Schwenkphase und bei Erreichen der Grenzgeschwindigkeit V₃ das Auffalten des Gleitschirms und die sich anschließende Gleitschirmphase mit der Landung durch den Gleitschirm 12.

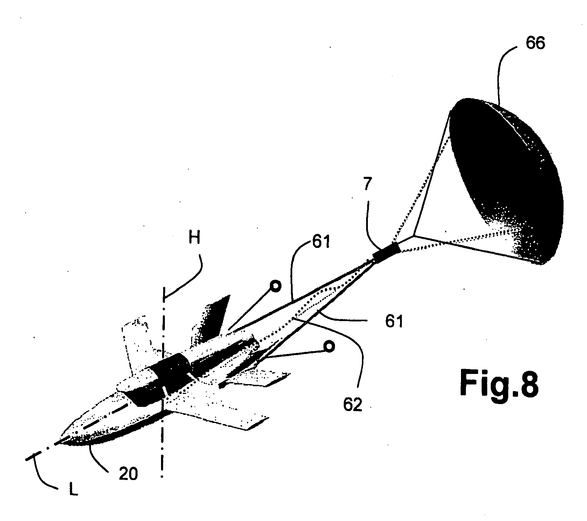

Wie bereits erwähnt, kann in einer alternativen Ausführung auf den Einsatz eines separaten Bremsfallschirms (Bezugsziffer 3 in Fig. 3) verzichtet werden. Die Bremsfunktion wird dann vollständig von einem Fallschirm übernommen, der auch die Verschwenkung des Fluggeräts bewirkt. Dieser Fallschirm wird als Brems- und Fluglagepositionierungsschirm bezeichnet. Eine solche Ausführung ist in Fig. 8 dargestellt, und zwar in einer Flugphase, in welcher der Brems- und Fluglagepositionierungsschirm 66 bereits voll aufgefaltet ist und er in die Längsachse des Fluggeräts 20 Bremszug ausübt. Sein Durchmesser kann insbesondere größer sein als der Durchmesser des Fluglagepositionsschirms 6 in der Ausführung gemäß Fig. 3.

Der Brems- und Fluglagepositionsschirm 66 ist auf dieselbe Art wie im Zusammenhang mit dem Fluglagepositionierungsschirm 6 gemäß Fig. 3 erläutert, an dem Fluggerät 20 angelenkt. Auf die Erläuterungen zu Fig. 3 wird verwiesen. Auch die Verschwenkungsphase des Fluggeräts sowie die Entfaltung des Gleitschirms erfolgt wie in den Fig. 4 bis 6 beschrieben.

In einer besonders vorteilhaften Ausführung wird der Brems- und Fluglagepositionsschirm nach dem Ausstoßen zunächst nur teilweise entfaltet. Er bleibt also in dieser Phase teilweise gerefft. Die Entreffung und damit vollständige Entfaltung des Schirms 66 erfolgt erst bei Erreichen einer vorgegebenen Geschwindigkeit, die in etwa der Geschwindigkeit V1 in Fig. 7 entspricht. Sie ist in jedem Fall geringer als die Geschwindigkeit V2, bei der die Verschwenkung des Fluggeräts erfolgt.

## Patentansprüche

1. Fluggerät (20) mit durch den Schwerpunkt verlaufender Längsachse (L) und im wesentlichen dazu senkrecht stehender Hochachse (H) mit einem Rettungslandesystem, welches über ein von Betriebsparametern des Fluggeräts auslösbares Startsignal von einer Auslöseinheit aktivierbar ist, wobei das Rettungslandesystem einen Gleitschirm (12) für die Rettungslandephase des Fluggeräts umfasst und die Auslöseinheit so angepasst ist, dass bei Auftreten des Startsignals ein mittels Zugleinen am Fluggerät angelenkter Verzögerungsschirm (3) ausgestoßen wird, **gekennzeichnet durch**
- eine - vorzugsweise in die Zugleinen (31) integrierte - Freigabeeinrichtung (4), die bei Abfall der Fluggeschwindigkeit unter eine vorherbestimmte erste Grenzgeschwindigkeit (V1) mittels Ausziehleinen (32) einen Fluglagepositionierungsschirm (6) aus einer Stauposition (5) in eine Bremsposition herauszieht und wobei wenigstens ein erstes Paar Fangleinen (61) des Fluglagepositionierungsschirmes (6), bezogen auf die Längsachse (L) hinter dem Schwerpunkt (S) des Fluggerätes (20) an diesem angeschlagen ist und wenigstens ein zweites Paar Fangleinen (62) vor dem Schwerpunkt (S) des Fluggerätes an diesem angeschlagen ist,
- eine Positionierungseinrichtung (7), welche bei Abfall der Fluggeschwindigkeit unter eine zweite Grenzgeschwindigkeit (V2) die auf das erste Paar Fangleinen (61) einwirkende Bremskraft des Fluglagepositionierungsschirmes (6) teilweise auf das zweite Paar Fangleinen (62) überträgt und das Fluggerät bezüglich seiner Bewegungsrichtung verschwenkt
- und eine Entfaltungseinrichtung (10) für den Gleitschirm (12), welche diesen auffaltet, sobald eine solche Verschwenkung des Fluggeräts (20) erreicht ist, dass die Hochachse (H) im wesentlichen der Zugrichtung des Fluglagepositionierungsschirmes (6) entspricht und eine vorgegebene maximale Gleitschirmgeschwindigkeit (V3) des Fluggeräts (20) unterschritten ist.

2. Fluggerät nach Anspruch 1, **dadurch gekennzeichnet, dass** die Positionierungseinrichtung (7) für den Fluglagepositionierungsschirm (6) im wesentlichen eine Klemmeinrichtung ist, in der das erste Paar Fangleinen (61) auf einem Teil seiner Gesamtlänge fixierbar ist und nach Unterschreiten der zweiten Grenzgeschwindigkeit (V2) die ganze Länge des ersten Fangleinenpaares (61) freigebbar ist und wobei die Länge des zweiten Paares Fangleinen (62) so abgestimmt ist, dass durch die Freigabe der Klemmeinrichtung auf das zweite Paar Fangleinen (62) Zugspannung vom Fluglagepositionierungsschirm (6) kommt.

3. Fluggerät nach Anspruch 1 oder Anspruch 2, **dadurch gekennzeichnet, dass** die Übertragung der Bremskraft von einem Paar Fangleinen (61) auf das zweite Paar Fangleinen (62) schrittweise erfolgt, wobei die Schritte jeweils nach einer vorgegebenen Geschwindigkeitsverringerung (ΔV) ausgelöst werden.

4. Fluggerät nach einem der Ansprüche 1 bis 3, **dadurch gekennzeichnet, dass** die Freigabeeinrichtung (4) im wesentlichen eine Klemmeinrichtung für die Zugleinen (31) ist, an der die Ausziehleinen (32) befestigt sind, wobei die Länge der Ausziehleinen (32) auf die Klemmlänge der Zugleinen (31) so abgestimmt ist, dass beim Öffnen der Klemmeinrichtung der Bremszug des Verzögerungsschirms (3) von den Zugleinen (31) auf die Ausziehleinen (32) übergeht und damit das Ausfalten des Fluglagepositionierungsschirms (6) bewirkt.

5. Fluggerät (20) mit durch den Schwerpunkt verlaufender Längsachse und im wesentlichen dazu senkrecht stehender Hochachse mit einem Rettungslandesystem, welches über ein von Betriebsparametern des Fluggeräts auslösbares Startsignal von einer Auslöseinheit aktivierbar ist, wobei das Rettungslandesystem einen . Gleitschirm (12) für die Rettungslandephase des Fluggeräts (20) umfasst und die Auslöseinheit so angepasst ist, dass bei Auftreten des Startsignals ein mittels Zugleinen am Fluggerät (20) angelenkter Brems- und Fluglagepositionierungsschirm (66) ausgestoßen wird, **gekennzeichnet durch**
- wenigstens ein erstes Paar Fangleinen (61) des Brems- und Fluglagepositionierungsschirms (66), das bezogen auf die Längsachse (L) hinter dem Schwerpunkt (S) des Fluggerätes (20) an diesem angeschlagen ist und wenigstens ein zweites Paar Fangleinen (62), das vor dem Schwerpunkt (S) des Fluggerätes angeschlagen ist,
- eine Positionierungseinrichtung (7), welche bei Abfall der Fluggeschwindigkeit unter eine vorgegebene Grenzgeschwindigkeit (V2) die auf das erste Paar Fangleinen (61) einwirkende Bremskraft des Brems- und Fluglagepositionierungsschirms (66) teilweise auf das zweite Paar Fangleinen (62) überträgt und das Fluggerät bezüglich seiner Bewegungsrichtung verschwenkt,
- eine Entfaltungseinrichtung (10) für den Gleitschirm (12), welche diesen auffaltet, sobald eine solche Verschwenkung des Fluggeräts (20) erreicht ist, dass die Hochachse (H) im wesentlichen der Zugrichtung des Brems- und Fluglagepositionierungsschirms (66) entspricht und eine vorgegebene maximale Gleitschirmgeschwindigkeit (V3) des Fluggeräts (20) unterschritten ist.

6. Fluggerät nach Anspruch 5, **dadurch gekennzeichnet, dass** die Positionierungseinrichtung (7) für den Brems- und Fluglagepositionierungsschirm (66) im wesentlichen eine Klemmeinrichtung ist, in der das erste Paar Fangleinen (61) auf einem Teil seiner Gesamtlänge fixierbar ist und nach Unterschreiten der vorgegebenen Grenzgeschwindigkeit die ganze Länge des ersten Fangleinenpaares (61) freigebbar ist und wobei die Länge des zweiten Paares Fangleinen (62) so abgestimmt ist, dass durch die Freigabe der Klemmeinrichtung auf das zweite Paar Fangleinen (62) Zugspannung vom Brems- und Fluglagepositionierungsschirm (6a) kommt.

7. Fluggerät nach einem der Ansprüche 6 oder 7, **dadurch gekennzeichnet, dass** die Übertragung der Bremskraft von einem Paar Fangleinen (61) auf das zweite Paar Fangleinen (62) schrittweise erfolgt, wobei die Schritte jeweils nach einer vorgegebenen Geschwindigkeitsverringerung (ΔV) ausgelöst werden.

8. Fluggerät nach einem der Ansprüche 5 bis 7, **dadurch gekennzeichnet, dass** der Brems- und Fluglagepositionierungsschirm (66) nach dem Ausstoßen zunächst nur teilweise entfaltet ist, und der Brems- und Fluglagepositionierungsschirm (66) eine Freigabeeinrichtung aufweist, mit der die vollständige Entfaltung des Brems- und Fluglagepositionierungsschirms (66) bei Erreichung einer weiteren Grenzgeschwindigkeit, welche geringer als die Grenzgeschwindigkeit (V2) für die Verschwenkung der Fluglage ist, ausgelöst wird.

## Claims

1. An aircraft (20) with a longitudinal axis (L) extending through the centre of gravity and a vertical axis (H) substantially perpendicular thereto with an emergency landing system which can be activated by a trigger unit via a start signal which can be triggered by operating parameters of the aircraft, wherein the emergency landing system comprises a gliding parachute (12) for the emergency landing phase of the aircraft and the trigger unit is adapted so that a retarder parachute (3), which is articulated to the aircraft by means of traction lines, is expelled upon the occurrence of the start signal, **characterised by**
- a release device (4) - preferably integrated into the traction lines (31) - which, when the airspeed drops below a predetermined first limiting speed (V1), pulls an attitude positioning parachute (6) out of a stowed position (5) into a braking position by means of pull-out lines (32), and wherein at least one first pair of rigging lines (61) of the attitude positioning parachute (6) is fastened to the aircraft (20) behind the centre of gravity (S) of the latter, related to the longitudinal axis (L), and at least one second pair of rigging lines (62) is fastened to the aircraft in front of the centre of gravity (S) of the latter,
- a positioning device (7) which, when the airspeed drops below a second limiting speed (V2), partly transmits the braking force of the attitude positioning parachute (6) acting on the first pair of rigging lines (61) to the second pair of rigging lines (62) and tilts the aircraft with regard to its direction of movement,
- and an unfolding device (10) for the gliding parachute (12) which unfolds this as soon as the aircraft (20) is tilted in such a way that the vertical axis (H) corresponds substantially to the traction direction of the attitude positioning parachute (6) and a speed drop to below a predetermined maximum gliding parachute speed (V3) of the aircraft (20) has occurred.

2. An aircraft according to Claim 1, **characterised in that** the positioning device (7) for the attitude positioning parachute (6) is essentially a clamping device in which the first pair of rigging lines (61) can be fixed over a part of its total length, and the entire length of the first rigging line pair (61) can be released following a speed drop to below the second limiting speed (V2), and wherein the length of the second pair of rigging lines (62) is adapted so that tensile stress is exerted on the second pair of rigging lines (62) by the attitude positioning parachute (6) through the release of the clamping device.

3. An aircraft according to Claim 1 or Claim 2, **characterised in that** the transmission of the braking force from one pair of rigging lines (61) to the second pair of rigging lines (62) takes place in steps, wherein the steps are in each case triggered according to a predetermined speed reduction (ΔV).

4. An aircraft according to any one of Claims 1 to 3, **characterised in that** the release device (4) is essentially a clamping device for the traction lines (31), to which device the pull-out lines (32) are fastened, wherein the length of the pull-out lines (32) is adapted to the clamped length of the traction lines (31) so that, when the clamping device is opened, the braking traction of the retarder parachute (3) passes from the traction lines (31) to the pull-out lines (32) and thus causes the attitude positioning parachute (6) to unfold.

5. An aircraft (20) with a longitudinal axis extending through the centre of gravity and a vertical axis substantially perpendicular thereto with an emergency landing system which can be activated by a trigger unit via a start signal which can be triggered by operating parameters of the aircraft, wherein the emergency landing system comprises a gliding parachute (12) for the emergency landing phase of the aircraft (20) and the trigger unit is adapted so that a brake and attitude positioning parachute (66), which is articulated to the aircraft (20) by means of traction lines, is expelled upon the occurrence of the start signal, **characterised by**
- at least one first pair of rigging lines (61) of the brake and attitude positioning parachute (66), which is fastened to the aircraft (20) after the centre of gravity (S) of the latter, related to the longitudinal axis (L), and at least one second pair of rigging lines (62), which is fastened before the centre of gravity (S) of the aircraft,
- a positioning device (7) which, when the airspeed drops below a predetermined limiting speed (V2), partly transmits the braking force of the brake and attitude positioning parachute (66) acting on the first pair of rigging lines (61) to the second pair of rigging lines (62) and tilts the aircraft with regard to its direction of movement,
- an unfolding device (10) for the gliding parachute (12) which unfolds the latter as soon as the aircraft (20) is tilted in such a way that the vertical axis (H) corresponds substantially to the traction direction of the brake and attitude positioning parachute (66) and a speed drop to below a predetermined maximum gliding parachute speed (V3) of the aircraft (20) has occurred.

6. An aircraft according to Claim 5, **characterised in that** the positioning device (7) for the brake and attitude positioning parachute (66) is essentially a clamping device in which the first pair of rigging lines (61) can be fixed over a part of its total length and the entire length of the first rigging line pair (61) can be released following a drop to below the predetermined limiting speed, and wherein the length of the second pair of rigging lines (62) is adapted so that tensile stress is exerted on the second pair of rigging lines (62) by the brake and attitude positioning parachute (66) through the release of the clamping device.

7. An aircraft according to either of Claims 6 and 7, **characterised in that** the transmission of the braking force from one pair of rigging lines (61) to the second pair of rigging lines (62) takes place in steps, wherein the steps are in each case triggered according to a predetermined speed reduction (ΔV).

8. An aircraft according to any one of Claims 5 to 7, **characterised in that** the brake and attitude positioning parachute (66) is initially only partly unfolded following expulsion, and the brake and attitude positioning parachute (66) comprises a release device by means of which complete unfolding of the brake and attitude positioning parachute (66) is triggered upon reaching a further limiting speed which is lower than the limiting speed (V2) for tilting the attitude.

## Revendications

1. Aéronef (20) ayant un axe longitudinal (L) passant par son centre de gravité et un axe normal (H), pratiquement perpendiculaire à celui-ci, équipé d'un système d'atterrissage de secours activé par une unité de déclenchement par un signal de départ, déclenché selon les paramètres de fonctionnement de l'aéronef,
le système d'atterrissage de secours comporte un parachute de vol (12) pour la phase d'atterrissage de secours de l'aéronef et l'unité de déclenchement est adaptée pour expulser un parachute frein (3) articulé à l'aéronef par des suspentes, à l'arrivée du signal de départ,
**caractérisé par**
- une installation de libération (4), de préférence intégrée dans les suspentes (31) qui, lorsque la vitesse de vol chute en dessous d'une première vitesse limite (V1), prédéfinie, extrait par des câbles d'extraction (32), un parachute de positionnement de l'état de vol (6) à partir d'une position rangée (5) vers une position de freinage, et au moins une première paire de câbles d'accrochage (61) du parachute de positionnement de l'état de vol (6), est prévue derrière le centre de gravité (S) de l'aéronef (20) selon l'axe longitudinal (L) et au moins une seconde paire de câbles d'accrochage (62) est fixée à l'aéronef en avant du centre de gravité (S),
- une installation de positionnement (7) en cas de chute de la vitesse de vol en dessous d'une seconde vitesse limite (V2) transmet la force de freinage du parachute de positionnement de l'état de vol (6), agissant sur la première paire de câbles d'accrochage (61), en partie à la seconde paire de câbles d'accrochage (62) et fait basculer l'aéronef par rapport à son sens de mouvement, et
- une installation de déploiement (10) pour le parachute de vol (12) qui déploie celui-ci dès que le basculement de l'aéronef (20) est effectué de façon que l'axe normal (H) corresponde pratiquement à la direction de traction du parachute de positionnement de l'état de vol (6) et qu'une vitesse de vol, maximale prédéfinie (V3) de l'aéronef (20) est dépassée vers le bas.

2. Aéronef selon la revendication 1,
**caractérisé en ce que**
l'installation de positionnement (7) pour le parachute de positionnement de l'état de vol (6) est pratiquement une installation de serrage dans laquelle la première paire de câbles d'accrochage (61) est bloquée sur une partie de sa longueur totale et, après passage en dessous de la seconde vitesse limite (V2), toute la longueur de la première paire de câbles d'accrochage (61) est libérée et la longueur de la seconde paire de câbles d'accrochage (62) est définie pour que la libération de l'installation de serrage transmette à la seconde paire de câble d'accrochage (62), l'effort de traction du parachute de positionnement de l'état de vol (6).

3. Aéronef selon la revendication 1 ou la revendication 2,
**caractérisé en ce que**
la transmission de la force de freinage d'une paire de câbles d'accrochage (61) à la seconde paire de câbles d'accrochage (62) se fait pas à pas et les pas sont déclenchés respectivement après une réduction prédéfinie de la vitesse (ΔV).

4. Aéronef selon l'une des revendications 1 à 3,
**caractérisé en ce que**
l'installation de libération (4) est principalement une installation de serrage des suspentes (31) auxquels sont fixés les câbles d'extraction (32), la longueur des câbles d'extraction (32) étant définie par rapport à la longueur de serrage des suspentes (31) pour qu'à l'ouverture de l'installation de serrage, la traction de freinage exercée par le parachute de freinage (3) passe des suspentes (31) aux câbles d'extraction (32) et produise ainsi le déploiement du parachute de positionnement de la l'état de vol (6).

5. Aéronef (20) comportant un axe longitudinal passant par son centre de gravité et un axe normal pratiquement perpendiculaire à celui-ci ainsi qu'un système d'atterrissage de secours activé par une unité de déclenchement par un signal de départ déclenché selon les paramètres de fonctionnement de l'aéronef,
le système d'atterrissage de secours ayant un parachute de vol (12) pour la phase d'atterrissage de secours de l'aéronef (20) et l'unité de déclenchement est adapté pour que l'arrivée du signal de départ produise l'expulsion d'un parachute frein et d'un parachute de positionnement de la position de vol (66) reliés de manière articulée l'aéronef (20) par des suspentes à,
**caractérisé en ce qu'**
- au moins une première paire de câbles d'accrochage (61) du parachute frein et de positionnement de vol (66) sont fixées à l'aéronef (20) derrière le centre de gravité (S) par rapport à son axe longitudinal (L) et au moins une seconde paire de câbles d'accrochage (62) est fixée en avant du centre de gravité (S) de l'aéronef,
- une installation de positionnement (7) qui, en cas de chute de la vitesse de vol en dessous d'une vitesse limite (V2), prédéfinie, transmet la force de freinage exercée par le parachute frein et le parachute de positionnement de l'état de vol (66) sur la première paire de câbles d'accrochage (61) pour reporter cette force de freinage en partie sur la seconde paire de câbles d'accrochage (62) et bascule l'aéronef par rapport à sa direction de mouvement,
- une installation de déploiement (10) pour le parachute de vol (12) qui déploie celui-ci dès que l'aéronef (20) a basculé de façon que l'axe normal (H) corresponde pratiquement à la direction de traction du parachute frein et du parachute de positionnement de l'état de vol (66) et qu'on passe en dessous d'une vitesse de vol maximale prédéfinie (V3) de l'aéronef (20).

6. Aéronef selon la revendication 5,
**caractérisé en ce que**
l'installation de positionnement (7) pour le parachute frein et de positionnement de l'état de vol (66) est principalement une installation de serrage dans laquelle se fixe la première paire de câbles d'accrochage (61) sur une partie de leur longueur totale et après passage en dessous de la vitesse limite prédéfinie, toute la longueur de la première paire de câbles d'accrochage (61) sera libérée et la longueur de la seconde paire de câbles d'accrochage (62) sera définie de façon que la libération de l'installation de serrage transmette à la seconde paire de câbles d'accrochage (62), la traction exercée par le parachute frein et de positionnement de l'état de vol (6a).

7. Aéronef selon la revendication 6,
**caractérisé en ce que**
la transmission de la force de freinage d'une paire de câbles d'accrochage (61) à la seconde paire de câbles d'accrochage (62) se fait pas à pas et les pas sont déclenchés chaque fois après une réduction prédéfinie de la vitesse (ΔV).

8. Aéronef selon l'une des revendications 5 à 7,
**caractérisé en ce que**
le parachute frein et de positionnement de l'état de vol (66) après expulsion ne se déploie tout d'abord que partiellement et le parachute frein et de positionnement de l'état de vol (66) comporte une installation de libération qui réalise le déploiement complet du parachute frein et de positionnement de l'état de vol (66) lorsqu'on atteint une autre vitesse limite inférieure à la vitesse limite, (V2) assurant le basculement de la position de vol.
